# EUROPEAN PATENT SPECIFICATION

(11) **EP 3 098 363 B1**
(45) Date of publication and mention of the grant of the patent: **28.03.2018**
(21) Application number: 16165569.1
(22) Date of filing: 15.04.2016
(51) Int. Cl.: E04C 2/292, E04C 2/296, E04C 2/16, E04C 2/52, E04B 1/76

(54) **PARTITION WALL STRUCTURE AND METHOD FOR MANUFACTURING A PARTITION WALL STRUCTURE**
TRENNWANDSTRUKTUR UND HERSTELLUNGSVERFAHREN DER TRENNWANDSTRUKTUR
STRUCTURE DE CLOISON ET SON PROCÉDÉ DE FABRICATION

(30) Priority: 26.05.2015 FI 20155389
(43) Date of publication of application: 30.11.2016
(73) Proprietor: Paroc Group Oy, 00180 Helsinki (FI)
(72) Inventor: Heikkilä, Janne, 02880 Veikkola (FI)
(74) Representative: LEITZINGER OY

(56) References cited:
- EP-A2- 0 004 086
- EP-A2- 1 094 166
- EP-A2- 2 141 303
- WO-A1-02/092342
- WO-A1-2007/085260
- FR-A1- 2 352 120

## Description

The present invention relates to a partition wall structure having at least two adjacent multilayered building elements extending the height of the partition wall and joined to each other, said building elements having a core, and surface layers on its two opposite main surfaces, said core being composed of lamellae of mineral wool in the vertical direction of the building element, said surface layers being bonded to the core by fixing them with the aid of an adhesive to the opposite main surfaces of the core. The invention also relates to a method for manufacturing a partition wall structure.

A partition wall structure with grooves for placing electrical wiring and pipes is known from WO 02/092342 A1. It is an object of the present invention to provide an improved partition wall structure enabling simple and fast assembly as well as greater freedom in the placement of electrical wiring and/or piping in the partition wall and to improve the fire resistance of the partition wall.

To achieve this object, a partition wall structure according to the invention is characterized by that in the core are formed, at a transverse distance from each other, several channels in the longitudinal direction of the element and extending across the entire length of the element for electrical wiring and pipes, said channels being located substantially in the middle area parallel with the thickness of the core. A method according to the invention, in turn, is characterized by that, in the method, from a mineral wool sheet, in which the fibres are substantially in a plane parallel with the main surfaces of the sheet, strips are cut, the width of which strips corresponds to the thickness of the core of the building element to be manufactured, on the latitudinal middle area of said strips is being formed a grooving, said strips being turned 90° and joined laterally to each other for a core of lamellar structure, in which the grooves of the lamellae form channels for electrical wiring or pipes.

The advantage of a partition wall structure according to the invention is i.a. that the channels in the partition wall elements allow an improved ability to place electrical wiring or piping at a desired site in a room.

In the following, the invention will be described in more detail with reference to the accompanying drawings, in which:
- Fig. 1: shows a schematic principle diagram viewed from the front of an embodiment of an element for a partition wall structure according to the invention,
- Fig. 2: shows a horizontal section of the element of Fig. 1 taken along line II-II in Fig. 1,
- Fig. 3: shows a schematic principle diagram of the joining of two straight-edged elements to each other, and
- Fig. 4: shows a schematic embodiment example of the fastening element to be used in the junction of Fig. 3.

The elements are manufactured by cutting strips from a mineral wool sheet, in which the fibres are substantially in a plane parallel with the main surfaces of the sheet, the width of said strips corresponding to the thickness of the core of the building element to be manufactured. On the latitudinal middle area of the strips is formed a grooving and the strips are turned 90° and joined laterally to each other for a core of lamellar structure 5, 5', 5", in which the fibres of the lamellae are substantially perpendicular in relation to the main surfaces of the core. On both of the main surfaces of the core are joined by gluing the surface sheets 2, 3, which can be, for example, plaster boards, wood-based sheets, such as plywood sheets, or metal sheets. A variety of lists can be used to seal the seam between the surface sheets. When using plaster boards as the surface sheets, the joints between the elements are normally treated with jointing filler. The partition wall building elements 1 according to the invention can be manufactured in a conventional continuous line, in which are made long series of similar elements, or in a so-called semi-continuous line, in which individual elements can be made consecutively in short series, or even single units.

The grooves in the lamellae are marked with a reference number 4. The grooves 4 of the lamellae form channels for electrical wiring or pipes. Of the lamellae closest to the edge, one 5' is provided with a rabbet groove 6 and the lamella 5" of the opposite edge is provided with a rabbet tongue 7, wherein the elements 1 to be installed side by side can be installed tightly against each other forming a substantially uniform insulating layer in the partition wall structure. The surface sheets 2, 3 are preferably interlaced, wherein their one edge 2', 3' extends over the corresponding edge lamella 5', 5" of the core in the lateral direction of the element 1. With this structure, the partition wall can be made without conventional horizontal supports. The height of the partition wall element is preferably 2600 mm, its width being 1200 mm and thickness preferably in the range of 60-200mm, but these dimensions can naturally be adapted according to different requirements.

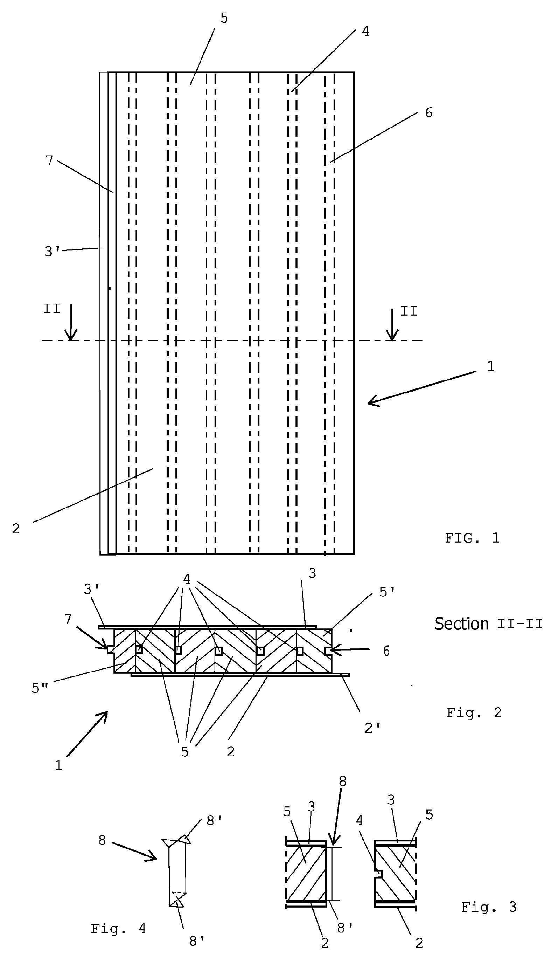

Such a partition wall structure allows implementation of the partition wall without separate supports, which can, in turn, weaken fire resistance. The attachment of the elements to each other can be assured, if necessary, for example, with metal fasteners, which have gripping spikes or equivalent protruding into the core of both adjacent elements. Such separate fastening elements are necessary particularly when making partition wall building elements straight-edged without a rabbet groove and tongue. Fig. 3 shows the joining of two straight-edged elements to each other by means of the fastening elements 8, the surface sheets 2, 3 of said building elements extending at their edges substantially into the same plane with the edge lamella 5 of the core. The gripping parts 8' of the fastening elements 8 of Fig. 3 are protruding between the lamella 5 of the first element and the surface sheet 2 and 3, respectively. When installing an adjacent element against the first element, the corresponding gripping parts of the fastening element 8 settle between the lamella and the surface sheet. In this case, the elements settle tightly against each other and remain in place without partition wall supports to be installed to the joint. The groove 4 in the other building element remains free forming a channel also at the junction of the elements. Fig. 4 shows a schematic principle diagram of an embodiment of the fastening element 8. In the case of the partition wall building elements provided with rabbet elements 6, 7, the fastening elements can be arranged separately to each side of the rabbet joint or they can be shaped to comply with the shape of the rabbet elements. Fastening elements can also be used to attach the first and/or last partition wall building element of the partition wall to the wall or other support structure that is transverse in relation to it.

The surface sheets of the elements are preferably provided with markings indicating the sites of the grooves 4 forming channels, wherein, for example, the sites of electric outlets in the partition wall can be selected easily and as optimally as possible.

## Claims

1. A partition wall structure having at least two adjacent multilayered building elements (1) extending the height of the partition wall and joined to each other, said building elements having a core, and surface layers on its two opposite main surfaces (2, 3), said core being composed of lamellae (5, 5', 5") of mineral wool in the vertical direction of the building element, said surface layers (2, 3) being bonded to the core by fixing them with the aid of an adhesive to the opposite main surfaces of the core, wherein in the lamellae (5) of the core are formed grooves (4), which form, at a transverse distance from each other, several channels in the longitudinal direction of the element and extending across the entire length of the element for placing electrical wiring and pipes with great freedom at selected sites in the partition wall, said channels being located substantially in the middle area parallel with the thickness of the core.

2. A partition wall structure according to claim 1, **characterized in that** adjacent building elements (1) are joined to each other by a rabbet joint (6, 7) and/or fasteners (8) without the use of a separate support.

3. A partition wall structure according to claim 1 or 2, **characterized in that** the surface sheets (2, 3) of the building elements (1) are arranged interlaced (2', 3') in relation to the core.

4. A partition wall structure according to any one of the preceding claims, **characterized in that** the surface sheet (2, 3) is a plaster board or a wood-based sheet material.

5. A method for manufacturing a partition wall structure, said method using at least two adjacent multilayered building elements extending the height of the partition wall and joined to each other, said building elements having a core, and surface layers (2, 3) on its two opposite main surfaces, said core being composed of lamellae (5, 5', 5") of mineral wool in the vertical direction of the building element, said surface layers (2, 3) being bonded to the core by fixing them with the aid of an adhesive to the opposite main surfaces of the core, **characterized in that**, in the method, from a mineral wool sheet, in which the fibres are substantially in a plane parallel with the main surfaces of the sheet, strips are cut, the width of which strips corresponds to the thickness of the core of the building element to be manufactured, on the latitudinal middle area of said strips is being formed a grooving, said strips being turned 90° and joined laterally to each other for a core of lamellar structure, in which the grooves (4) of the lamellae (5) form channels for electrical wiring or pipes.

6. A method according to claim 5, **characterized in that** building elements (1) to be installed side by side are joined to each other with a rabbet joint (6, 7) and/or fasteners (8) without the use of a separate support at the joint.

## Patentansprüche

1. Trennwandstruktur mit mindestens zwei angrenzenden mehrschichtigen Bauelementen (1), die sich über die Höhe der Trennwand erstrecken und miteinander verbunden sind, wobei die Bauelemente einen Kern und Oberflächenschichten auf ihren zwei gegenüberliegenden Hauptflächen (2, 3) aufweisen, wobei der Kern aus Lamellen (5, 5', 5") aus Mineralwolle in der vertikalen Richtung des Bauelements besteht, wobei die Oberflächenschichten (2, 3) an den Kern gebunden sind, indem sie mit Hilfe eines Haftstoffs an den gegenüberliegenden Hauptflächen des Kerns befestigt sind, wobei in den Lamellen (5) des Kerns Rillen (4) gebildet sind, die in einem Querabstand zueinander mehrere Kanäle in der Längsrichtung des Elements bilden und sich über die gesamte Länge des Elements erstrecken, um elektrische Verkabelung und Rohre mit großem Spielraum an ausgewählten Stellen in der Trennwand unterzubringen, wobei die Kanäle im Wesentlichen im Mittelbereich parallel zur Dicke des Kerns angeordnet sind.

2. Trennwandstruktur nach Anspruch 1, **dadurch gekennzeichnet, dass** angrenzende Bauelemente (1) durch Fugenverbindungen (6, 7) und/oder Befestigungselemente (8), ohne Verwendung einer separaten Abstützung, miteinander verbunden sind.

3. Trennwandstruktur nach Anspruch 1 oder 2, **dadurch gekennzeichnet, dass** die Oberflächenplatten (2, 3) der Bauelemente (1) im Verhältnis zum Kern verschachtelt (2', 3') angeordnet sind.

4. Trennwandstruktur nach einem der vorhergehenden Ansprüche, **dadurch gekennzeichnet, dass** die Oberflächenplatte (2, 3) aus Gipskarton oder einem Plattenmaterial auf Holzbasis besteht.

5. Verfahren zur Herstellung einer Trennwandstruktur, wobei das Verfahren mindestens zwei angrenzende mehrschichtige Bauelemente verwendet, die sich über die Höhe der Trennwand erstrecken und miteinander verbunden werden, wobei die Bauelemente einen Kern und Oberflächenschichten (2, 3) auf ihren zwei gegenüberliegenden Hauptflächen aufweisen, wobei der Kern aus Lamellen (5, 5', 5") aus Mineralwolle in der vertikalen Richtung des Bauelements besteht, wobei die Oberflächenschichten (2, 3) an den Kern gebunden werden, indem sie mit Hilfe eines Haftstoffs an den gegenüberliegenden Hauptflächen des Kerns befestigt werden, **dadurch gekennzeichnet, dass** in dem Verfahren aus einer Mineralwolleplatte, in der die Fasern im Wesentlichen in einer Ebene liegen, die parallel zu den Hauptflächen der Platte liegt, Streifen geschnitten werden, die Breite der Streifen der Dicke des Kerns des herzustellenden Bauelements entspricht, auf dem in Breiterichtung liegenden Mittelbereich der Streifen Rillen gebildet werden, für einen Kern mit Lamellenstruktur die Streifen um 90° gedreht und seitlich miteinander verbunden werden, wobei die Rillen (4) der Lamellen (5) Kanäle für elektrische Verkabelung und Rohre bilden.

6. Verfahren nach Anspruch 5, **dadurch gekennzeichnet, dass** die Bauelemente (1), die nebeneinander eingebaut werden sollen, mit einer Fugenverbindung (6, 7) und/oder Befestigungselementen (8), ohne Verwendung einer separaten Abstützung, miteinander verbunden werden.

## Revendications

1. Structure de cloison de séparation comportant au moins deux éléments de construction multicouches (1) adjacents s'étendant sur la hauteur de la cloison de séparation et reliés l'un à l'autre, lesdits éléments de construction comportant un noyau, et des couches de surface sur ses deux surfaces principales opposées (2, 3), ledit noyau étant constitué de lamelles (5, 5', 5") de laine minérale dans la direction verticale de l'élément de construction lesdites couches de surface (2, 3) étant collées au noyau en étant fixées à l'aide d'un adhésif aux surfaces principales opposées du noyau, dans laquelle
des gorges (4) sont formées dans les lamelles (5) du noyau, lesquelles forment, à une distance transversale les unes des autres, plusieurs canaux dans la direction longitudinale de l'élément et s'étendant à travers toute la longueur de l'élément pour placer des câbles électriques et des conduits avec une grande liberté à des emplacements au choix dans la cloison de séparation, lesdits canaux étant situés substantiellement dans la zone centrale parallèlement à l'épaisseur du noyau.

2. Structure de cloison de séparation selon la revendication 1, **caractérisée en ce que** des éléments de construction (1) adjacents sont reliés les uns aux autres par un assemblage à feuillure (6, 7) et/ou des fixations (8), sans utiliser de support séparé.

3. Structure de cloison de séparation selon la revendication 1 ou 2, **caractérisée en ce que** les feuilles de surface (2, 3) des éléments de construction (1) sont disposées entrelacées (2', 3') par rapport au noyau.

4. Structure de cloison de séparation selon l'une quelconque des revendications précédentes, **caractérisée en ce que** la feuille de surface (2, 3) est une plaque de plâtre ou un matériau en feuille à base de bois.

5. Procédé pour la fabrication d'une structure de cloison de séparation, ledit procédé employant au moins deux éléments de construction multicouches adjacents s'étendant sur la hauteur de la cloison de séparation et reliés les uns aux autres, lesdits éléments de construction comportant un noyau, et des couches de surface (2, 3) sur ses deux surfaces principales opposées, ledit noyau étant constitué de lamelles (5, 5', 5"') de laine minérale dans la direction verticale de l'élément de construction, lesdites couches de surface (2, 3) étant collées au noyau en étant fixées à l'aide d'un adhésif aux surfaces principales opposées du noyau, **caractérisé en ce que**, dans le procédé, à partir d'une feuille de laine minérale, dans laquelle les fibres sont substantiellement dans un plan parallèle aux surfaces principales de la feuille, des bandes sont découpées, la largeur desdites bandes correspondant à l'épaisseur du noyau de l'élément de construction à fabriquer, des gorges étant formées sur la zone centrale latitudinale desdites bandes, lesdites bandes étant tournées de 90° et reliées latéralement les unes aux autres pour un noyau à structure lamellaire, les gorges (4) des lamelles (5) formant des canaux pour des câbles électriques ou des conduits.

6. Procédé selon la revendication 5, **caractérisé en ce que** des éléments de construction (1) à installer côte à côte sont reliés les uns aux autres avec un assemblage à feuillure (6, 7) et/ou des fixations (8), sans utiliser de support séparé au niveau de l'assemblage.
